# EUROPEAN PATENT APPLICATION

(11) **EP 4 826 783 A1**
(43) Date of publication of application: **21.10.2026**
(21) Application number: 24904303.5
(22) Date of filing: 16.12.2024
(51) Int. Cl.: H01M 4/36, H01M 4/38, C01B 33/02, H01M 10/052, H01M 4/02

(54) **ANODE ACTIVE MATERIAL, METHOD FOR MANUFACTURING SAME, AND LITHIUM SECONDARY BATTERY COMPRISING SAME**

(30) Priority: 14.12.2023 KR 20230181948
(71) Applicant: POSCO Holdings Inc., Pohang-si, Gyeongsangbuk-do 37859 (KR)
(72) Inventor: KIM, Dae-Hyun, Pohang-si, Gyeongsangbuk-do 37877 (KR); KIM, Jin-Won, Pohang-si, Gyeongsangbuk-do 37877 (KR); YOU, Seung-Jae, Pohang-si, Gyeongsangbuk-do 37877 (KR); WOO, Jung-Gyu, Pohang-si, Gyeongsangbuk-do 37877 (KR)
(74) Representative: Pfenning, Meinig & Partner mbB
(86) International application number: PCT/KR2024/020357
(87) International publication number: WO 2025/127738

(57) **Abstract**

The purpose of one aspect of the present invention is to provide an anode active material. The anode active material includes: silicon-based particles; and a coating layer disposed on the surfaces of the silicon-based particles, wherein an average particle diameter (D50) of the silicon-based particles is 1.0-2.8 µm, the coating layer includes a polymer, and in the Raman spectrum of the anode active material, a full width at half maximum of a peak positioned in a 480-540 cm⁻¹ region may be greater than 23 cm⁻¹.

## Description

### Technical Field

The present disclosure relates to an anode active material, a method for manufacturing the same, and a lithium secondary battery comprising the same.

### Background Art

In general, as the market for electronic devices such as mobile phones, laptops and PCs has grown, the market for lithium secondary batteries that are power sources thereof is also rapidly growing. In addition, as interest in environmental problems increases and demand for eco-friendly vehicles such as electric vehicles correspondingly increases, lithium secondary batteries capable of meeting various uses are being researched

Among the components of a lithium secondary battery, an anode active material stores lithium ions during charging and plays an important role in improving charge rate and capacity of the battery. Among these anode active materials, the silicon-based active material is attracting attention because it has superior electrochemical properties such as capacity and energy output to the carbon-based active material.

However, in general, silicon-based active materials have a large volume expansion and contraction during charge and discharge, which causes deterioration of the life characteristics of batteries. In addition, there is a problem that a thick SEI layer is formed due to side reactions between the silicon-based active material and the electrolyte.

Accordingly, there is a need for research on silicon-based anode active materials that can minimize volume expansion due to continuous charge and discharge while suppressing side reactions with the electrolyte.

### Disclosure of Invention

### Technical Problem

An aspect of the present disclosure is to provide an anode active material which can reduce volume expansion and minimize side reactions with an electrolyte to improve life characteristics, a method for manufacturing the same, and a lithium secondary battery comprising the same.

The technical problems to be solved of the present invention are not limited to those described above. Additional technical problems of the present invention will be apparent from the description of the specification and will not cause any difficulty for a person skilled in the art to understand them.

### Solution to Problem

One aspect of the present disclosure is to provide an anode active material. According to the aspect of the present disclosure, the anode active material includes: silicon-based particles and a coating layer disposed on the surfaces of the silicon-based particles, wherein the average particle diameter (D50) of the silicon-based particles is in a range of 1.0 to 2.8 µm, the coating layer includes a polymer, and, in the Raman spectrum of the anode active material, a full width at half maximum of a peak located at a region of 480 to 540 cm⁻¹ may be greater than 23 cm⁻¹.

In addition, in the above-described anode active material, a value of the Raman shift corresponding to the maximum peak in the Raman spectrum of the anode active material may be 499 cm⁻¹ or more.

In addition, in one of the above-described anode active materials, a cyclization reaction temperature or condensation reaction temperature of the polymer may be in a range of 200 to 350°C.

In addition, in one of the above-described anode active materials, the polymer may include cyclized or condensed polyacrylonitrile, nitrile butadiene rubber, carboxymethyl cellulose, polyacrylic acid, polyaniline, or a mixture thereof on the surface of the silicon-based particles.

In addition, in one of the above-described anode active materials, the polymer may include a cyclized polyacrylonitrile-based polymer.

In addition, in one of the above-described anode active materials, the polymer may be included in an amount of 0.5 to 10.0 wt% based on the total weight of the anode active material.

In addition, in one of the above-described anode active materials, the coating layer may further include fibrous carbon.

In addition, in one of the above-described anode active materials, the fibrous carbon may include one or more selected from the group consisting of carbon nanotubes (CNT), a carbon nanofiber (CNF), and vapor-grown carbon fiber (VGCF).

In addition, in one of the above-described anode active materials, the fibrous carbon may be included in an amount of 0.1 to 1.0 wt% based on the total weight of the anode active material.

In addition, in one of the above-described anode active materials, the silicon-based particles may be silicon (Pure Si) particles.

In addition, in one of the above-described anode active materials, the silicon-based particle may have a D10 of 0.1 to 1.4 µm.

In addition, in one of the above-described anode active materials, the silicon-based particles may be included in an amount of 80 wt% or more based on the total weight of the anode active material.

Another aspect of the present invention provides a method for manufacturing an anode active material. According to the aspect of the present disclosure, the method includes the operations of: preparing a precursor solution including a polymer; adding silicon-based particles to the precursor solution to obtain a mixture; and heat treating the mixture at a temperature of 200 to 350°C, wherein an average particle diameter (D50) of the silicon-based particles may be in a range of 1.0 µm to 2.8 µm.

In addition, in the above-described method, in preparing the precursor solution, the precursor solution may further include a fibrous carbon.

Another aspect of the present invention is to provide a lithium secondary battery. According to the aspect of the present disclosure, the lithium secondary battery includes an anode, a cathode, and an electrolyte, wherein the anode includes one of the above-described anode active materials.

### Advantageous Effects of Invention

According to an aspect of the present disclosure, a coating layer including a polymer is formed on the surface of silicon-based particles so that strong compressive stress can be applied to the silicon-based particles. Accordingly, volume expansion of the anode active material due to continuous charge and discharge may be improved, and cycle life characteristics may be enhanced.

In addition, the anode active material according to one embodiment may further include fibrous carbon in the coating layer, thereby having improved electrical conductivity and applying stronger compressive stress on silicon-based particles.

In addition, according to the present invention, the coating layer can minimize direct contact between silicon-based particles and an electrolyte, thereby suppressing formation of a thick and unstable SEI due to side reactions with the electrolyte.

In addition, according to the present invention, even if cracking of the silicon-based particles occurs, the coating layer can prevent deintercalation of the anode active material from the electrode plate.

The various advantages and effects of the present invention are not limited to those described above but can be easily understood from the description of specific embodiments.

### Brief Description of Drawings

A brief description of each figure is provided to fully understand the drawings referred to in the detailed description of the invention.
FIG. 1 is a graph showing the Raman spectra of the anode active materials in Embodiment 1, Embodiment 2, and Comparative Example 1.
FIG. 2 is a photograph of an anode active material in Embodiment 2 observed using a scanning electron microscope (SEM).
FIG. 3 is a graph showing capacity retention at 50-cycle of the lithium half-cells manufactured in Embodiment 1, Embodiment 2, Comparative Example 1, and Comparative Example 2.

### Best Mode for the Invention

Hereinafter, a preferred embodiment of the present invention will be described. However, embodiments of the present invention may be modified in various other forms, and it should not be construed as limited to the embodiments set forth herein. In addition, unless otherwise specified, singular terms used in this specification include plural terms as well.

In the present disclosure, a term "including" is used to indicate that other components may be further included without excluding other components unless otherwise specified.

In addition, unless otherwise specified in the specification of the present invention, a unit of % means wt%.

In addition, in the present specification, "Dn" may mean a particle size distribution and a particle diameter at an n% point of a cumulative distribution of the number of particles according to the particle diameter. For example, D50 is a particle diameter (average particle diameter) at a 50% point of the cumulative distribution of the number of particles according to the particle diameter, D90 is a particle diameter at a 90% point of the cumulative distribution of the number of particles according to the particle diameter, and D10 is a particle diameter at a 10% point of the cumulative distribution of the number of particles according to the particle diameter. Meanwhile, the particle size distribution can be measured using a laser diffraction method. Specifically, after dispersing the powder to be measured in a dispersion medium, the particle size distribution may be calculated by introducing the dispersed powder into a laser diffraction particle size measuring apparatus, and measuring the difference in diffraction patterns according to particle size when the particles pass through a laser beam.

Unless otherwise defined, all terms including technical and scientific terms used herein have the same meaning as commonly understood by one of ordinary skill in the art to which this invention belongs. Predefined terms are interpreted to have meanings consistent with relevant technical literature and the present disclosure.

Hereinafter, the anode active material according to one embodiment of the present invention will be described. The anode active material according to one embodiment of the present invention may include silicon-based particles and a coating layer disposed on the surfaces of the silicon-based particles and including a polymer. In other words, the anode active material may include a core which is a silicon-based particle and a shell disposed on the surface of the core and containing a polymer.

The silicon-based particles may be a base of the anode active material. For example, the silicon-based particles are materials including silicon atoms as main components and may include, for example, particles consisting of silicon atoms (Si), that is, pure silicon particles (pure Si, purity of Si > 98%). The silicon particles have advantages in that initial charge and discharge capacity and efficiency can be improved compared to those of silicon oxide (SiOₓ (0 < x ≤ 2)) or silicon carbide (SiC), and manufacturing costs are low so commercialization thereof is excellent.

The average particle diameter (D50) of the silicon-based particles may be in a range of 1.0 to 2.8 µm. When the average particle diameter (D50) of the silicon-based particles is less than 1.0 µm, there are problems that the specific surface area of the silicon-based particles excessively increases and an undesired side reaction with the electrolyte solution occurs, and the content of the coating layer relative to the silicon-based particles in the anode active material excessively increases, thereby damaging the advantages of silicon exhibiting high capacity. In addition, when the average particle diameter (D50) of the silicon-based particles as the core in the core-shell structure of the anode active material is less than 1.0 µm, there is a risk that the smooth contact with the electrolyte may not be achieved due to insufficient interparticle space of the anode active material.

The maximum size of the average particle diameter (D50) of the silicon-based particles should be a size at which the coating layer (shell) containing the polymer is not damaged by volume change of the silicon-based particles caused by repeated charge and discharge. However, when the volume change of the silicon-based particles is excessively large, there is a risk that the silicon-based coating layer is damaged by repeated volume changes, the structure in layer (membrane) is broken, and the coating layer cannot apply compressive stress to the silicon-based particles, thereby acting as only a simple resistance component. In order for the coating layer to not be damaged even in repeated volume changes, the average particle diameter (D50) of the silicon-based particles may be 2.8 µm or less. That is, the average particle diameter (D50) of the silicon-based particles may be 1.0 to 2.8 µm, more preferably 1.0 to 2.5 µm, and still more preferably 1.0 to 2.0 µm.

For example, the silicon-based particles may have a D10 of 0.1 to 1.4 µm. When the D10 of the silicon-based particles is less than 0.1 µm, side reactions with an electrolyte solution may occur or uniform coating on the anode may be difficult and it may be difficult to reduce resistance for charge transfer by not properly securing a pore structure. In addition, when the D10 of the silicon-based particles exceeds 1.4 µm, the volume expansion degree of the silicon-based particles may increase or the thickness change of the electrode may excessively increase due to continuous charging and discharging. That is, the silicon-based particles may have a D10 of 0.1 to 1.4 µm, more specifically, 0.5 to 1.2 µm, and even more specifically, 0.8 to 1.0 µm.

For example, the silicon-based particles may be included in an amount of 80 wt% or more based on the total weight of the anode active material. When the content of the silicon-based particles is less than 80 wt%, it may be difficult to sufficiently secure the capacity of the anode active material. In addition, when the content of the silicon-based particles is excessively high, it may be difficult to improve volume expansion of the silicon-based particles. That is, the content of the silicon-based particles may be 80 wt% or more, specifically 85.0 to 99.5 wt%, more specifically 90.0 to 99.5 wt%, and even more specifically 95.0 to 99.5 wt%.

The coating layer may improve volume expansion of the silicon-based particles and thus enhance electrochemical properties (e.g., initial efficiency, life characteristics or capacity of a secondary battery). In addition, the coating layer may minimize direct contact between the silicon-based particles and the electrolyte to suppress thick SEI formation caused by side reactions with the electrolyte and prevent continuous generation of the SEI. In addition, the coating layer may prevent deintercalation of the anode active material from the current collector even when cracking of the silicon-based particles occurs.

The coating layer may be disposed on the surface of the silicon-based particle. For example, the coating layer may be at least partially disposed on the surface of the silicon-based particle and more specifically entirely provided on the surface of the silicon-based particle. In other words, the coating layer may wrap around the surface of the silicon-based particle and more specifically entirely wrap around the surface of the silicon-based particle.

The coating layer may include a polymer. However, the present disclosure is not limited thereto, and the coating layer may further include crystalline carbon such as artificial graphite, natural graphite, expanded graphite, or carbon black, conductive carbon, or may further include amorphous carbon derived from petroleum-based pitch, coal-based pitch, sucrose, glucose, or galactose.

Since the polymer is elastic, it can effectively suppress volume expansion of the silicon-based particles and even if the silicon-based particles are fragmented by cracking, silicon-based fragments may be maintained in a similar or identical shape to that of the silicon-based particles before cracking occurs, and the anode active material may be prevented from deintercalating from the current collector.

The polymer contained in the coating layer may be a cyclized or condensed polymer. Specifically, the polymer contained in the coating layer may be a polymer that is cyclized or condensed on the surface of the silicon-based particles. The temperature for cyclization reaction or condensation reaction of the polymer may be in a range of 200 to 350°C. When the temperature for cyclization reaction or condensation reaction is within the above range, the molecular structure of the polymer is rearranged, and thus the polymer can apply strong compressive stress to the silicon-based particles. Accordingly, structural stability and electrical conductivity of the anode active material may be improved. In addition, since the polymer is not carbonized but the cyclization reaction or condensation reaction is performed, cracking of the coating layer may be improved compared with conventional carbon materials, and flexibility may be improved so that deintercalation of the silicon-based particles from the anode active material due to volume expansion and contraction may also be improved.

Specifically, the cyclized or condensed polymer may be a polymer in which at least one of a cyclization reaction of a nitrile group, a condensation reaction involving a nitrile group, a condensation reaction involving a carboxyl group or hydroxyl group, a cyclization reaction involving an aniline group, and a condensation reaction involving an aniline group occurs.

In one advantageous example where a stronger compressive stress can be applied to the silicon-based particles by the coating layer, the polymer contained in the coating layer may be a polymer having an aromatic ring due to cyclization reaction of nitrile groups occurring when disposed on the surface of the silicon-based particles.

Examples of the polymer having an aromatic ring by cyclization reaction of a nitrile group include a cyclized polyacrylonitrile-based polymer. The polyacrylonitrile-based polymer may be a polymer in which acrylonitrile accounts for 90 to 100 wt% of the polymer backbone. Specifically, the polyacrylonitrile-based polymer may be a polymer containing 90 to 100 wt% of structures derived from acrylonitrile and 10 wt% or less of structures derived from monomers copolymerizable with acrylonitrile such as itaconic acid, acrylamide, methacrylic acid, etc. In this case, the number average molecular weight of the polyacrylonitrile-based polymer may be about 10,000 to 500,000 g/mol, but is not limited thereto.

Other examples of the polymer capable of cyclization or condensation include at least one selected from the group consisting of polyacrylonitrile, nitrile butadiene rubber, carboxymethyl cellulose, polyacrylic acid and polyaniline. In this case, the coating layer may include cyclized or condensed polyacrylonitrile, nitrile butadiene rubber, carboxymethyl cellulose, polyacrylic acid, polyaniline, or a mixture thereof on the surface of the silicon-based particles.

For example, the polymer may be included in an amount of 0.5 to 10.0 wt%, specifically 0.6 to 5.0 wt%, more specifically 0.7 to 2.0 wt%, and even more specifically 0.7 to 1.5 wt% based on the total weight of the anode active material. When the content of the polymer is less than 0.5 wt%, it may be difficult to secure the above-described effect because the coating layer is not sufficiently formed on the surface of the silicon-based particle. In addition, when the content of the polymer is excessively large, since the thickness of the coating layer increases, there may occur a problem that resistance to charge and ion movement increases.

For example, the coating layer may further include fibrous carbon. In one embodiment of the present invention, the coating layer simultaneously includes a polymer and fibrous carbon, and in this case, stronger compressive stress may be applied to silicon-based particles through synergistic effects (composite effect) of the polymer and the fibrous carbon. Accordingly, the volume expansion rate of the anode active material due to continuous charging and discharging may be improved.

The fibrous carbon may provide excellent conductivity to the anode active material. For example, the fibrous carbon may include one or more selected from the group consisting of carbon nanotubes (CNT), a carbon nanofiber (CNF), and vapor-grown carbon fiber (VGCF).

In a favorable example, the fibrous carbon may be carbon nanotubes. The carbon nanotube may include single-wall CNTs (SWCNTs) and/or multi-wall CNTs (MWCNTs). In the multi-wall carbon nanotube, the number of walls may be in a range of 2 to 20. Since the carbon nanotube has a high aspect ratio and flexibility, it can easily form a network structure in which the carbon nanotubes are randomly entangled or in contact with each other on the surface of the silicon-based particles, thereby forming a conductive network uniformly over the entire surface of the silicon-based particles. In addition, since the coating layer is in the form of a composite including a matrix of polymer and a dispersed phase of carbon nanotube, greater compressive stress may be applied to the silicon-based particle by the coating layer, and durability of the coating layer may be greatly increased, thus further improving cycle characteristics of the anode active material. The aspect ratio (length of major axis/diameter of minor axis) of the carbon nanotube contained in the coating layer may be in a range of 10 to 50,000, specifically 50 to 10,000.

For example, the fibrous carbon may be included in an amount of 0.1 to 1.0 wt% based on the total weight of the anode active material. When the content of the fibrous carbon is less than 0.1 wt%, the electrical conductivity of the anode active material may decrease and it may be difficult to compensate for low electrical conductivity of the polymer, thereby increasing resistance to charge transfer. When the content of the fibrous carbon exceeds 1.0 wt%, there are problems that improvement efficiency of electrochemical properties of the anode active material with respect to cost of raw materials is not good, resulting in increased manufacturing costs. In addition, when the content of the fibrous carbon exceeds 1.0 wt%, since specific surface area increases, side reactions with electrolyte occur, causing depletion of lithium ions in the electrolyte, gas generation, reduction of electrochemical efficiency, etc. That is, the content of the fibrous carbon may be 0.1 to 1.0 wt%, specifically 0.1 to 0.8 wt%, more specifically 0.1 to 0.5 wt%.

The coating layer may further include a conductive two-dimensional nanostructure together with the fibrous carbon or independently of the fibrous carbon. Representative examples of the conductive two-dimensional nanostructure include graphene and reduced graphene oxide (RGO). When the coating layer further includes the conductive two-dimensional nanostructure, the conductive two-dimensional nanostructure may be included in an amount of 0.05 to 0.50 wt% based on the total weight of the anode active material.

In the Raman spectrum of the anode active material, the full width at half maximum of a peak located in a region of 480 to 540 cm⁻¹, specifically a region of 485 to 520 cm⁻¹, may be greater than 23 cm⁻¹, more specifically greater than 23 cm⁻¹ and 30 cm⁻¹ or less, still more specifically 24 to 30 cm⁻¹, and even more specifically 25 to 30 cm⁻¹. Here, in the Raman spectrum of the anode active material, the full width at half maximum may be calculated by measuring the width of the peak at the 1/2Iₘₐₓ point, where Iₘₐₓ is the maximum intensity (maximum Raman scattering intensity) of the peak located in the region of 480 to 540 cm⁻¹, specifically 485 to 520 cm⁻¹.

The anode active material according to an embodiment of the present invention has a characteristic in that the full width at half maximum is increased compared to the full width at half maximum of the general uncoated silicon-based active material. That is, when a coating layer including a polymer is formed on the surface of silicon-based particles, compressive stress is applied to a wider region of the silicon-based particles, thereby improving volume expansion of the silicon-based particles.

For example, in the Raman spectrum of the anode active material, the value of the Raman shift corresponding to the maximum intensity Iₘₐₓ of a peak located in a region of 480 to 540 cm⁻¹, specifically, a region of 485 to 520 cm-1, may be 499 cm⁻¹ or more, specifically, 499 cm⁻¹ to 515 cm⁻¹, more specifically, 500 to 515 cm⁻¹, still more specifically, 503 to 510 cm⁻¹, and even more specifically, 505 to 509 cm⁻¹.

The anode active material according to an embodiment of the present invention has a characteristic in that the value of the Raman shift increases compared with the value of the Raman shift of uncoated silicon-based active material. That is, when a coating layer including polymer is formed on the surface of silicon-based particles, stronger compressive stress may be applied to the silicon-based particles and thus volume expansion rate of the anode active material by repeated charge and discharge may be improved.

Hereinafter, a method for manufacturing an anode active material according to an embodiment of the present disclosure will be described. However, the anode active material according to an embodiment of the present disclosure is not necessarily manufactured by the following manufacturing method.

### [Operation of preparing precursor solution]

A precursor solution including a polymeric material may be prepared. In this operation, the polymeric material may be converted into the polymer of the anode active material described above by means of cyclization and/or condensation reaction. Accordingly, the polymeric material subjected to cyclization and/or condensation reaction may correspond to the polymer of the anode active material described above.

For example, the cyclization reaction temperature or condensation reaction temperature of the polymeric material may be in a range of 200°C to 350°C. When the cyclization reaction temperature or condensation reaction temperature is within the above-mentioned range, the polymeric material does not become carbonized and its molecular structure is rearranged, thereby applying strong compressive stress on silicon-based particles of an anode active material finally manufactured. Accordingly, structural stability and electrical conductivity of the anode active material may be improved.

For example, the polymeric material may be a polyacrylonitrile-based polymeric material. The polyacrylonitrile-based polymeric material may be a polymeric material in which acrylonitrile accounts for 90 to 100 mass% of the polymer backbone. Specifically, the polyacrylonitrile-based polymeric material may be a polymeric material containing 90 to 100 mass% of structures derived from acrylonitrile and 10 mass% or less of structures derived from monomers copolymerizable with acrylonitrile such as itaconic acid, acrylamide, methacrylic acid, etc.

For example, polymeric material may include one or more selected from the group consisting of polyacrylonitrile, nitrile butadiene rubber, carboxymethyl cellulose, polyacrylic acid, and polyaniline.

For example, the polymeric material may be dissolved in a solvent to prepare a solution containing the polymeric material. For example, the solvent may include N-methyl-2-pyrrolidone (NMP). However, the present disclosure is not limited thereto, and various types of solvents capable of dissolving the polymeric material such as N,N-dimethylformamide (DMF), dimethyl sulfone (DMSO₂), dimethyl sulfoxide (DMSO), N,N-dimethylacetamide (DMAc), ethylene carbonate (EC), or propylene carbonate (PC) may be used.

For example, the solution may further include fibrous carbon. For example, the fibrous carbon may include one or more selected from the group consisting of carbon nanotubes (CNT), a carbon nanofiber (CNF), and vapor-grown carbon fiber (VGCF).

For example, when the solution includes fibrous carbon, the operation of preparing the precursor solution may include after preparing a solution containing the polymeric material, adding fibrous carbon to the solution containing the polymeric material and agitating the solution containing the polymeric material and the fibrous carbon. For example, agitating may be performed until the color of the solution becomes uniform.

### [Operation of obtaining mixture]

The precursor solution may be mixed with silicon-based particles to obtain a mixture. The description of the silicon-based particles in this operation is identical to that described above for the silicon-based particles of the anode active material. For example, the average particle diameter (D50) of the silicon-based particles may be in a range of 1.0 to 2.8 µm, specifically 1.0 to 2.5 µm, and more specifically 1.0 to 2.0 µm.

For example, the operation of obtaining a mixture may be performed by adding silicon-based particles to a precursor solution and then agitating the dispersion containing the polymer and the silicon-based particles.

For example, after the operation of obtaining a mixture, the method may further include drying the mixture at 100 to 200°C, specifically 100 to 170°C. The solvent contained in the mixture can be evaporated through the drying operation. For example, the drying operation may use various kinds of drying methods known in the art such as spray drying, vacuum drying, hot air drying and the like.

### [Operation of heat treatment]

The mixture may be heat-treated at a temperature of 200 to 350°C. When the mixture is heat-treated, a coating layer including a cyclized and/or condensed polymeric material in a state coated on the surface of the silicon particles may be uniformly formed on the surface of the silicon-based particles. In one embodiment of the present disclosure, when the precursor solution includes a polymeric material and fibrous carbon in the operation of preparing a precursor solution, the coating layer including the cyclized and/or condensed polymeric material and fibrous carbon may be formed on the surface of the silicon-based particles in the heat treatment operation.

In this operation, the polymeric material is not carbonized, and a cyclization reaction or condensation reaction may be performed so that molecular structure may be rearranged (e.g., a chain-type molecular structure may be rearranged into a regular cyclic structure). Accordingly, the polymer in the coating layer maintains a regular molecular structure, whereby the mechanical strength of the anode active material can be increased and volume expansion of silicon-based particles due to charging and discharging can be improved. In addition, according to one embodiment of the present invention, the coating layer may further include fibrous carbon, in which case electrical conductivity of the anode active material can be enhanced and resistance for charge transfer can be reduced.

When the heat treatment temperature is less than 200°C, a cyclization reaction or condensation reaction of the polymeric material may not be performed and thus compressive stress applied to the silicon-based particles decreases, thereby reducing an effect of improving volume expansion. In addition, when the heat treatment temperature exceeds 350°C, a decomposition reaction of the polymeric material occurs unintentionally and decomposed polymeric materials are carbonized, which makes it difficult to form a flexible (or soft) coating layer on the surface of the silicon-based particles. That is, the heat treatment temperature may be in a range of 200°C to 350°C, more specifically, 230°C to 330°C, and still more specifically, 280°C to 310°C.

For example, the heat treatment may be performed for 2 to 6 hours. When the time of performing the heat treatment is in the above range, a coating layer may be uniformly formed on the surface of the silicon-based particles.

For example, the heat treatment may be performed in an inert atmosphere. For example, the inert atmosphere may be a nitrogen atmosphere. However, the present disclosure is not limited thereto and the inert atmosphere may be variously adjusted within a range that does not impair the effect of the present disclosure, such as an argon atmosphere or a helium atmosphere.

For example, the process may further include a operation of crushing the dried mixture before heat treatment. For example, the crushing operation can be performed using an agitator or a crush mill that applies shear force to break up agglomerates.

Hereinafter, a lithium secondary battery according to an embodiment of the present disclosure will be described. The lithium secondary battery according to an embodiment of the present disclosure may include an anode, a cathode, and an electrolyte.

The anode may include an anode active material layer including the above-described anode active material and a current collector.

The current collector may serve to impart conductivity. The material that can be used as the current collector is not particularly limited and a conductive material which does not cause chemical change in the battery may be used. For example, the current collector may include copper, stainless steel, aluminum, nickel, titanium, baked carbon, or surface-treated with carbon, nickel, titanium, silver, etc. on the surfaces of aluminum or stainless steel.

The anode active material layer may be disposed on at least one surface of the current collector and specifically may be disposed on one or both surfaces thereof. For example, the anode active material may be included in an amount of 80 to 98 wt% based on the total weight of the anode active material layer.

The anode active material layer may further include a binder and/or a conductive material. The binder may serve to attach particles constituting the anode active material to each other and improve adhesion of the anode active material to the current collector. For example, the binder may be included in an amount of 1 to 5 wt% based on the total weight of the anode active material layer.

For example, the binder may include a nonaqueous binder, an aqueous binder or a combination thereof. For example, the nonaqueous binder may include one or more selected from the group consisting of ethylene/propylene copolymer, polyacrylonitrile (PAN), polystyrene (PS), polyvinyl chloride (PVC), carboxylated polyvinyl chloride, poly(vinylidene fluoride) (PVDF), polyurethane, polytetrafluoroethylene (PTFE), polyethylene (PE), polypropylene (PP), polyamide-imide (PAI) and polyimide (PI). However, it is not limited thereto.

The aqueous binder may include one or more selected from the group consisting of styrene butadiene rubber (SBR), acrylated styrene butadiene rubber, nitrile butadiene rubber (NBR), acrylic rubber, butyl rubber, fluoro rubber, a polymer including ethylene oxide, polyvinyl pyrrolidone (PVP), polyepichlorohydrin, polyphosphazenes, ethylene propylene diene terpolymer (EPDM), poly(vinyl pyridine), chlorosulfonated polyethylene (CSM), latex, polyester resin, acrylic resin, phenol resin, epoxy resin and polyvinyl alcohol (PVA). However, it is not limited thereto.

For example, when an aqueous binder is used as the binder, the anode active material layer may further include a thickening agent capable of imparting viscosity thereto. The thickening agent may include cellulose-based compounds. For example, the cellulose-based compound may include one or more selected from the group consisting of carboxymethyl cellulose, hydroxypropyl methylcellulose, methylcellulose and alkali metal salts in which hydrogen thereof is replaced with Na, K or Li. For example, the thickening agent may be included in an amount of 0.1 to 3 wt% based on the total weight of the anode active material layer.

The conductive material may be used to provide conductivity to the electrode. The conductive material is not particularly limited and any material having conductivity without causing a chemical change in the battery can be used as the conductive material. For example, the conductive material may include carbon-based materials such as natural graphite, artificial graphite, carbon black, acetylene black, Ketjen black, and carbon fiber; metal-based materials such as copper powder or metal fibers, nickel powder or metal fibers, aluminum powder or metal fibers, silver powder or metal fibers, etc.; conductive polymers such as polyphenylenes; or mixtures thereof.

The anode may be obtained by mixing an active material for an anode with a binder and/or conductive material in a solvent to manufacture an active material composition, and applying the active material composition onto a current collector. For example, the solvent may include water. A method of manufacturing such an anode may apply a conventionally used method in the art, and thus a detailed description thereof will not be provided herein.

The cathode includes a current collector and a cathode active material layer formed on at least one surface of the current collector and including a cathode active material. For example, the cathode active material may be included in an amount of 80 to 98 wt% based on the total weight of the cathode active material layer.

The current collector may serve to impart conductivity. The material that can be used as the current collector is not particularly limited and a conductive material which does not cause chemical change in the battery may be used. For example, as the current collector, stainless steel, aluminum, nickel, titanium, baked carbon or a material surface-treated materials with carbon, nickel, titanium, silver, or the like on the surface of aluminum or stainless steel may be used.

The cathode active material may include a compound capable of reversible intercalation and deintercalation of lithium (a lithiated intercalating compound). The cathode active material use any cathode active material used in general, and may include one or more selected from among composite oxides of lithium with metals selected from cobalt, manganese, nickel, and combinations thereof. Specifically, the cathode active material may be include layered compounds such as lithium cobalt oxide (LiCoO₂) and lithium nickel oxide (LiNiO₂), or compounds substituted with one or more transition metals; lithium iron oxides such as LiFe₃O₄; lithium manganese oxides such as Chemical Formula Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni site-type lithium nickel oxide represented by Chemical Formula LiNi_{1-c2}M_{c2}O₂ (where M is one or more selected from the group consisting of Co, Mn, Al, Cu, Fe, Mg, B, and Ga, and satisfies 0.01≤c2≤0.3); lithium manganese composite oxide represented by Chemical Formula LiMn_{2-c3}M_{c3}O₂ (where M is one or more selected from the group consisting of Co, Ni, Fe, Cr, Zn, and Ta, and satisfies 0.01≤c3≤0.1) or Li₂Mn₃MO₈ (where M is one or more selected from the group consisting of Fe, Co, Ni, Cu, and Zn); and LiMn₂O₄ in which part of Li in the Chemical Formula is substituted with an alkaline earth metal ion, but is not limited thereto. The cathode may be Li-metal.

For example, a compound having a coating layer on the surface of the compound may be used, or the compound and a compound having a coating layer may be mixed and used. The coating layer may include one or more coating element compounds selected from the group consisting of an oxide of a coating element, a hydroxide of a coating element, an oxyhydroxide of a coating element, an oxycarbonate of a coating element and a hydroxycarbonate of a coating element. The compound forming the coating layer may be amorphous or crystalline. The coating elements to be included in the coating layer may include at least one selected from the group consisting of Mg, Al, Co, K, Na, Ca, Si, Ti, V, Sn, Ge, Ga, B, As and Zr. A process for forming the coating layer is not limited as long as it can coat the above-mentioned elements using these elements without adversely affecting physical properties of the cathode active material (e.g., spray coating, immersion method, etc.), and any coating method may be used, and since methods conventionally used in the art can be applied thereto, detailed description thereof will be omitted herein.

The cathode active material layer may further include a binder and/or a conductive material. The binder may serve to attach particles constituting the cathode active material to each other and improve adhesion of the cathode active material to the current collector. For example, the binder may be included in an amount of 1 to 5 wt% based on the total weight of the cathode active material layer.

The binder may include one or more selected from the group consisting of poly(vinylidene fluoride) (PVDF), poly(vinylidene fluoride-co-hexafluoropropylene) (PVDF-co-HFP), polyvinyl alcohol (PVA), polyacrylonitrile (PAN), carboxymethyl cellulose, starch, hydroxypropyl methylcellulose, regenerated cellulose, polyvinyl chloride (PVC), carboxylated polyvinyl chloride, polyvinyl pyrrolidone (PVP), polytetrafluoroethylene (PTFE), polyethylene (PE), polypropylene (PP), ethylene propylene diene terpolymer (EPDM), sulfonated-EPDM, styrene butadiene rubber (SBR), fluoro rubber and various copolymers thereof.

The conductive material may be used to provide conductivity to the electrode. The conductive material is not particularly limited and any material having conductivity without causing a chemical change in the battery can be used as the conductive material. For example, the conductive material may include graphite such as natural graphite or artificial graphite; carbon-based materials such as carbon black, acetylene black, Ketjen black, channel black, furnace black, lamp black, thermal black, and carbon fiber; metal powder or metal fibers of metals such as copper, nickel, aluminum, and silver; conductive whiskers such as zinc oxide and potassium titanate; conductive metal oxides such as titanium oxide; or conductive polymers such as polyphenylenes; and the like, and one or more of these materials may be used alone or in combination.

The cathode may be obtained by mixing the cathode active material with a binder and/or conductive material in a solvent to manufacture an active material composition, and applying the active material composition onto a current collector. For example, the solvent may include water. The method of manufacturing such a cathode may apply methods conventionally used in the art, and thus detailed description thereof will not be provided herein.

The electrolyte may include, but is not limited to, an organic liquid electrolyte, an inorganic liquid electrolyte, a solid polymer electrolyte, a gel-type polymer electrolyte, a solid inorganic electrolyte, or a molten inorganic electrolyte, which are conventionally usable in the art in manufacturing a lithium secondary battery. Specifically, the electrolyte may include a nonaqueous organic solvent and/or a lithium salt.

The nonaqueous organic solvent may serve as a medium in which ions involved in the electrochemical reaction of the battery can move. For example, the nonaqueous organic solvent may include one or more selected from the group consisting of carbonate solvents, ester solvents, ether solvents, ketone solvents, alcohol solvents and aprotic solvents.

The carbonate-based solvent may include dimethyl carbonate, diethyl carbonate, dicaprylyl carbonate, methylpropyl carbonate, ethylpropyl carbonate, methylethyl carbonate, ethylene carbonate, propylene carbonate, butylene carbonate, or the like. The ester-based solvent may include methyl acetate, ethyl acetate, n-propyl acetate, dimethyl acetate, methyl propionate, ethyl propionate, propyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethanol, isopropyl alcohol, or the like. The aprotic solvent may include nitriles such as R-CN (in which R is a linear, branched, or cyclic hydrocarbon group having 2 to 20 carbon atoms, and may contain a double bond aromatic ring or an ether linkage), amides such as dimethylformamide, dioxolanes such as 1,3-dioxolane, sulfolanes, or the like.

The lithium salt is dissolved in an organic solvent to serve as a source of lithium ions within the battery and promote movement of lithium ions between the cathode and anode, thereby enabling basic operation of the lithium secondary battery. The anion of the lithium salt may be selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

For example, the concentration of the lithium salt may be in a range of 0.1 to 2.0 M. When the concentration of the lithium salt is within the above-mentioned range, the electrolyte has an appropriate conductivity and viscosity, thereby exhibiting excellent electrolyte performance, so that lithium ions can move more effectively.

For example, depending on the type of lithium secondary battery, a lithium secondary battery may further include a separator formed between the cathode and the anode. The separator separates the anode from the cathode and provides a passage for movement of lithium ions, and any material known in the art as a separator for a secondary battery can be used without particular limitation. For example, polyethylene, polypropylene, polyvinylidene fluoride or a multilayer film having two or more layers thereof can be used as the separator. However, the present invention is not limited thereto, and a mixed multilayer film such as a polyethylene/polypropylene bilayer separator, a polyethylene/polypropylene/polyethylene tri-layered separator, or a polypropylene/polyethylene/polypropylene tri-layered separator can also be used as the separator.

The lithium secondary battery may be disposed in a battery case. The shape of the battery case may include at least one selected from the group consisting of a cylindrical shape using a can, a prismatic shape, a pouch shape, and a coin shape. However, the shape of the battery case is not limited thereto, and may have various shapes used in the art.

### Mode for Invention

Hereinafter, the present disclosure will be described in more detail with reference to examples. However, it should be noted that the following examples are merely for illustrating and describing the present disclosure in greater detail, but not intended to limit the scope of the present disclosure. The scope of the present disclosure is determined by the matters set forth in the claims and those reasonably inferred therefrom.

### (Embodiment 1)

A precursor solution was prepared by dissolving 1 g of PAN (number average molecular weight=150,000) in an NMP solvent. Thereafter, 99 g of a Si powder was added to the precursor solution. In this case, the Si powder was metallurgical grade having purity of 99% or more and oxygen content of 1% or less, and had a D50 of 1.3 µm (D10 of 0.5 µm or more and D90 of 10 µm or less). Thereafter, the precursor solution with the Si powder added was sufficiently agitated to obtain a mixture. After drying the mixture at 150°C while maintaining an agitated state, the dried mixture was crushed using an agitator, and heat-treated at 300°C for 4 hours in a nitrogen atmosphere to manufacture the anode active material of Embodiment 1.

### (Embodiment 2)

A precursor solution was prepared by adding 0.5 g of MWCNTs (aspect ratio = 10,000) to a solution prepared by dissolving 1 g of PAN in an NMP solvent, and then sufficiently agitating the solution until the color of the solution became uniform. Thereafter, 99 g of Si powder (D10: 0.5 µm, D50: 1.3 µm) were added to the precursor solution and agitated sufficiently to obtain a mixture. After drying the mixture at 150°C while maintaining an agitated state, the dried mixture was crushed using an agitator, and heat-treated at 300°C for 4 hours in a nitrogen atmosphere to manufacture the anode active material of Embodiment 2.

### (Comparative Example 1)

Si powder particles used as raw materials in Embodiment 1 and 2 were prepared as anode active material of Comparative Example 1.

### (Comparative Example 2)

In the manufacturing method of Embodiment 2, the anode active material of Comparative Example 2 was manufactured in the same manner as in Embodiment 2 except that a Si powder having a D50 of 3.3 µm was used.

### (Experimental example 1: Raman analysis of anode active material)

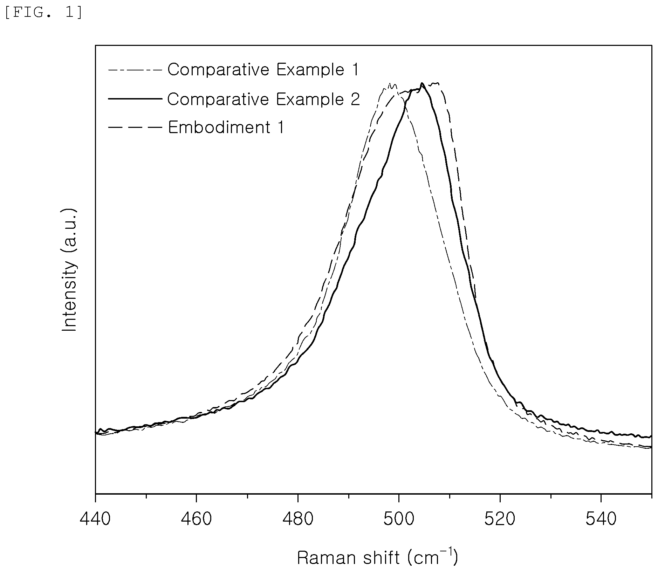

Raman analysis was performed on each of the anode active materials of the Embodiments and Comparative Examples, and the results of the Raman spectra of the respective anode active materials are shown in FIG. 1 and Table 1.

Raman analysis was performed using a Raman II-Senterra of Bruker under the following conditions: excitation wavelength of 532 nm, laser current of 100%, excitation power of 5.08 mW, and excitation power density of 1.38 × 10⁵ W/cm². In the measured the Raman spectrum, the full width at half maximum of the peak located in the region of 480 to 540 cm⁻¹ and the value of the Raman shift corresponding to the maximum intensity of the peak located in the region of 480 to 540 cm⁻¹ are summarized in Table 1.

**[Table 1]**

| Classification | Full width at half maximum of the Peak (cm⁻¹) | Raman shift corresponding to maximum peak (cm⁻¹) |
|---|---|---|
| Embodiment 1 | 24.7 | 504.57 |
| Embodiment 2 | 27.9 | 507.78 |
| Comparative Example 1 | 23 | 498.13 |

Referring to Table 1 and FIG. 1, Embodiments 1 and 2, which satisfy the manufacturing conditions proposed in the present disclosure, showed larger values of the full width at half maximum and the Raman shift than Comparative Example 1 in which no coating layer was formed.

It was confirmed that the Raman shift corresponding to the maximum peak of Embodiments 1 and 2 shifted to the right compared to Comparative Example 1. That is, when a coating layer including a polymer is formed on the surface of the silicon-based particles, stronger compressive stress may be applied to the silicon-based particles, and thus it was found that the volume expansion rate of the anode active material due to continuous charging and discharging is improved.

In addition, it was confirmed that the full width at half maximum of Embodiments 1 and 2 had a tendency to increase compared with Comparative Example 1. That is, when a coating layer including a polymer is formed on the surface of the silicon-based particles, compressive stress is applied to a wider region of the silicon-based particles, and thus it was found that the volume expansion of the silicon-based particles is improved.

Specifically, it was found that when a polymer-containing coating layer is formed on silicon-based particles having a purity of 99% or more, an oxygen content of 1% or less, a D10 of 0.5 µm or more, a D50 of 1 µm or more, and a D90 of 10 µm or less, compressive stress is applied to a wider region of the silicon-based particles.

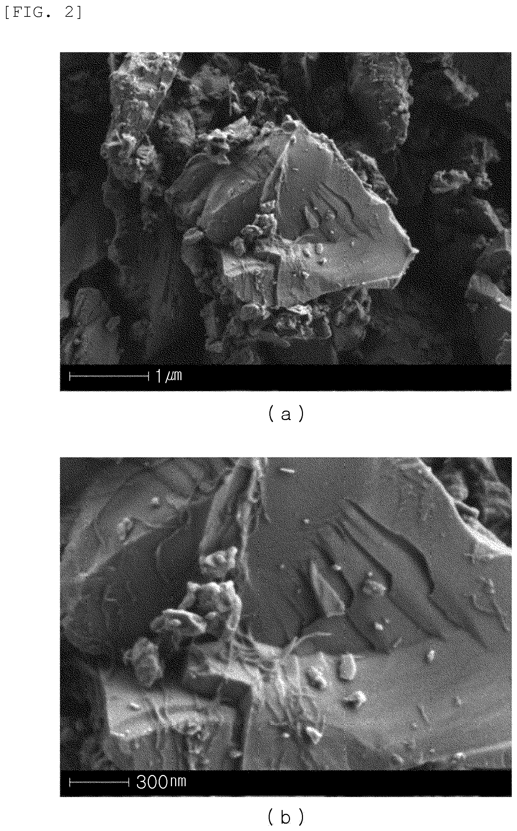

In this regard, a photograph of the anode active material of Embodiment 2 observed using a scanning electron microscope (SEM) is shown in FIG. 2 as an example. Specifically, FIG. 2(a) shows an SEM photograph of the anode active material of Embodiment 2 magnified at 20,000 times, and FIG. 2(b) shows an SEM photograph of the anode active material of Embodiment 2 magnified at 25,000 times.

Referring to FIG. 2, it was confirmed that the coating layer was uniformly formed on the surface of the silicon-based particles, and that the fibrous carbon was attached to the surface of the silicon-based particles in the form of a network entangled and in contact with each other.

### (Experimental embodiment 2: Evaluation of electrochemical properties of the anode active material)

In order to evaluate the electrochemical properties of the above examples and comparative examples, lithium half-cells were manufactured using each anode active material.

Specifically, the anode active material, polyacrylic acid (PAA), and conductive carbon black (C-65) were mixed at a weight ratio of 6:3:1, and dispersed in distilled water to manufacture an anode slurry. Thereafter, the anode was manufactured by coating the anode slurry on the copper foil current collector and rolling the same.

A coin-type half-cell of 2032 was manufactured by using the anode as a working electrode and lithium metal as a counter electrode. In this case, a separator made of a porous polypropylene film was interposed between the anode and the lithium metal. In addition, as an electrolyte, a solution in which 1 M of LiPF₆ was dissolved in a mixed solvent of ethylene carbonate (EC) and ethyl methyl carbonate (EMC) at a volume ratio of 3:7, with 1.5 wt% of vinylene carbonate (VC) and 10 wt% of fluoroethylene carbonate (FEC) added, was used.

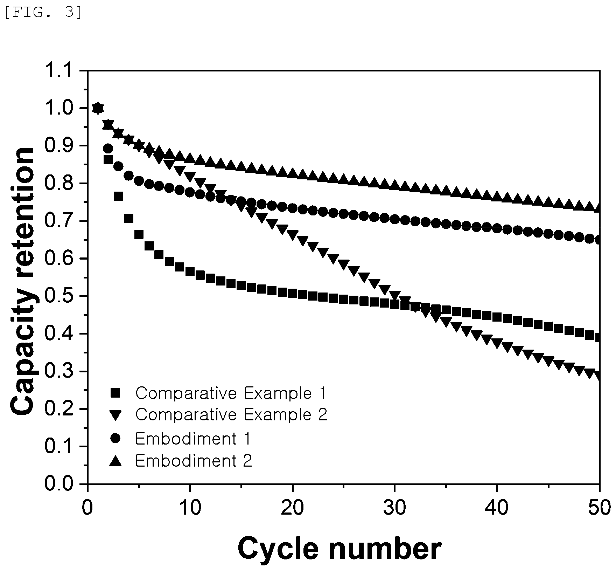

The results of initial efficiency, the initial discharge capacity, and the capacity retention rate at 50-cycle of the half-cells manufactured in Embodiments and Comparative Examples were measured, and are shown in Table 2 and FIG. 3. Specifically, FIG. 3 is a graph showing the capacity retention rates at 50-cycle of lithium half-cells manufactured in Embodiment 1, Embodiment 2, Comparative Example 1, and Comparative Example 2.

Specifically, the battery was charged (CC/CV mode, 0.1 C charge, 0.005 C cut-off) until it reached 5 mV and then discharged (CC mode, 0.1 C discharge) until it reached 1.5 V. In this case, the initial discharge capacity was measured at this time, and the initial efficiency was calculated as a percentage of the initial discharge capacity with respect to the initial charge capacity.

Thereafter, the charging (CC/CV mode, 0.5 C charge, 0.005 C and 5 mV cut-off) and discharging (CC mode, 0.5 C discharge, 1.0 V cut-off) cycles were repeated 50 times, and then a capacity retention rate at 50-cycle was calculated by the following equation. 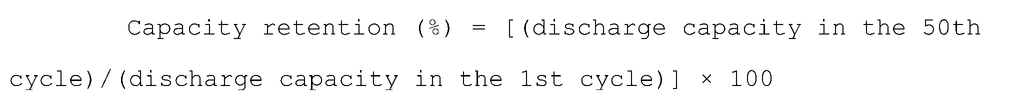Capacity retention (%) = [(discharge capacity in the 50th cycle)/(discharge capacity in the 1st cycle)] × 100

**[Table 2]**

| Classification | Si Powder D50(µm) | Initial Efficiency (%) | Initial Discharge Capacity (mAh/g) | Capacity Retention after 50-Cycle (%) |
|---|---|---|---|---|
| Embodiment 1 | 1.3 | 91.3 | 3251 | 64.9 |
| Embodiment 2 | 1.3 | 92.5 | 3510 | 73.2 |
| Comparative Example 1 | 1.3 | 90.9 | 3476 | 38.9 |
| Comparative Example 2 | 3.3 | 92.6 | 3632 | 28.0 |

Referring to Table 2 and FIG. 3, it can be seen that Embodiments 1 and 2 had significantly higher levels of initial efficiency, initial discharge capacity, and capacity retention rate than Comparative Example 1. That is, it was found that a coating layer was formed on the surface of the silicon-based particles, strong compressive stress was applied to the silicon-based particles, and thus the initial efficiency and life characteristics were improved.

In addition, Comparative Example 2 manufactured with silicon-based particles having an excessively large D50 was measured to have a very low capacity retention rate. That is, it can be seen that when the D50 of the silicon-based particle is excessively large, volume expansion occurs by continuous charge and discharge, thereby degrading life characteristics.

### (Experimental example 3: Evaluation of electrode expansion of an anode manufactured with an anode active material)

The electrode expansion of the lithium half-cells manufactured in Embodiment and Comparative Examples in Experimental Example 2 was measured, and the results are shown in Table 3.

A method for measuring the electrode expansion rate is as follows. After repeating the charge and discharge cycle performed in Experimental Example 2 fifty times, lithium charging was performed on the anode, and the lithium half-cell was disassembled in a dry room. The thickness of the anode was measured using a thickness gauge after separating the lithium-charged anode, and the electrode expansion rate was calculated by the formula of [(thickness after experiment-thickness before experiment)/(thickness before experiment)], and all thicknesses were calculated by subtracting the thickness of the copper foil used as the substrate. For one anode, the thickness was measured at five or more points, and the electrode expansion rate was calculated using the average value thereof, and after setting the electrode expansion rate of Comparative Example 1 to one, the relative electrode expansion rate was calculated based on Comparative Example 1.

**[Table 3]**

| Classification | Relative Electrode Expansion Rate |
|---|---|
| Embodiment 1 | 0.631 |
| Embodiment 2 | 0.504 |
| Comparative Example 1 | 1 |

Referring to Table 3, it was found that Embodiments 1 and 2 had a lower relative electrode expansion rate than Comparative Example 1. That is, it was found that strong compressive stress was applied to the silicon-based particles through the coating layer, and thus the expansion of the electrode due to charging and discharging was improved.

The above embodiments are merely examples, and the present disclosure is not limited thereto. While example embodiments have been shown and described above, it will be apparent to those skilled in the art that modifications and variations could be made without departing from the scope of the present disclosure as defined by the appended claims.

## Claims

1. An anode active material comprising:
silicon-based particles; and
a coating layer disposed on the surface of the silicon-based particles,
wherein an average particle diameter (D50) of the silicon-based particles is in a range of 1.0 to 2.8 µm,
the coating layer comprises a polymer, and,
in the Raman spectrum of the anode active material, a full width at half maximum of a peak located at a region of 480 to 540 cm⁻¹ is greater than 23 cm⁻¹.

2. The anode active material according to claim 1, wherein a value of the Raman shift corresponding to the maximum peak in the Raman spectrum of the anode active material is 499 cm⁻¹ or more.

3. The anode active material of claim 1, wherein the cyclization reaction temperature or condensation reaction temperature of the polymer is in a range of 200 to 350°C.

4. The anode active material of claim 1, wherein the polymer is cyclized or condensed polyacrylonitrile, nitrile butadiene rubber, carboxymethyl cellulose, polyacrylic acid, polyaniline, or a mixture thereof on the surface of the silicon-based particles.

5. The anode active material of claim 1, wherein the polymer comprises a cyclized polyacrylonitrile-based polymer.

6. The anode active material of claim 1, wherein the polymer is included in an amount of 0.5 to 10.0 wt% based on the total weight of the anode active material.

7. The anode active material of claim 1, wherein the coating layer further comprises fibrous carbon.

8. The anode active material of claim 7, wherein the fibrous carbon comprises one or more selected from the group consisting of carbon nanotubes (CNT), a carbon nanofiber (CNF), and vapor-grown carbon fiber (VGCF).

9. The anode active material of claim 7, wherein the fibrous carbon is included in an amount of 0.1 to 1.0 wt% based on the total weight of the anode active material.

10. The anode active material of claim 1, wherein the silicon-based particles are silicon (Si) particles.

11. The anode active material of claim 1, wherein the silicon-based particles have a D10 of 0.1 to 1.4 µm.

12. The anode active material of claim 1, wherein the silicon-based particles are included in an amount of 80 wt% or more based on the total weight of the anode active material layer.

13. A method for manufacturing an anode active material comprising the operations of:
preparing a precursor solution including a polymer;
adding silicon-based particles to the precursor solution to obtain a mixture; and
heat treating the mixture at a temperature of 200 to 350°C,
wherein an average particle diameter (D50) of the silicon-based particles is in a range of 1.0 µm to 2.8 µm .

14. The method for manufacturing an anode active material of claim 13, wherein the precursor solution further comprises a fibrous carbon.

15. A lithium secondary battery comprising:
an anode;
a cathode; and an electrolyte,
wherein the anode comprises the anode active material according to any one of claims 1 to 12.
